# EUROPEAN PATENT SPECIFICATION

(11) **EP 2 708 353 B1**
(45) Date of publication and mention of the grant of the patent: **12.10.2016**
(21) Application number: 13156418.9
(22) Date of filing: 22.02.2013
(51) Int. Cl.: A41D 31/02, B32B 5/18, B32B 5/32, B32B 5/16, B32B 5/24, B32B 7/14, B32B 27/06, B32B 27/08, B32B 27/12, B32B 27/32, B32B 27/40

(54) **Moisture Permeable Waterproof Composite Film and Moisture Permeable Waterproof Fabric Having Moisture Permeable Waterproof Composite Film**
Feuchtigkeitsdurchlässige, wasserdichte Verbundfolie und feuchtigkeitsdurchlässiges, wasserdichtes Gewebe mit feuchtigkeitsdurchlässiger, wasserdichter Verbundfolie
Film composite étanche perméable à l'humidité et tissu étanche perméable à l'humidité doté dudit film

(30) Priority: 13.09.2012 JP 2012201647; 04.12.2012 JP 2012265413
(43) Date of publication of application: 19.03.2014
(73) Proprietor: Tec One Co., Ltd., Ishikawa 929-0124 (JP)
(72) Inventor: Asano, Akira, Nomi-shi, Ishikawa (JP); Oriuchi, Masaki, Nomi-shi, Ishikawa (JP)
(74) Representative: Dummett Copp LLP

(56) References cited:
- EP-A1- 0 397 998
- WO-A1-99/30211
- CN-B- 101 135 115
- JP-A- 2003 326 661
- JP-A- 2009 221 630
- JP-A- 2011 011 349
- US-A1- 2007 082 189

## Description

### TECHNICAL FIELD

This invention relates to a moisture permeable waterproof composite film and a moisture permeable waterproof fabric having a moisture permeable waterproof composite film.

### BACKGROUND ART OF THE INVENTION

Conventionally, fabric which is excellent in waterproofness and in moisture permeability is employed for use in sportwear, rain apparel, etc. As shown in JP Patent Application Publication (Kokai) No.2001-315236, a porous polytetrafluoroethylene film is known as a thin film exhibiting both waterproofness and moisture permeability.

This porous polytetrafluoroethylene film is formed of a three-dimensional matrix or lattice structure wherein nodes each formed of green raw particle are linked together via fibrous fibril. This porous polytetrafluoroethylene film is provided with a large number of fine pores, each surrounded by nodes and fibrous fibril. Namely, this porous polytetrafluoroethylene film is constructed such that a large number of fine pores are communicated with each other.

Since polytetrafluoroethylene is in itself hydrophobic, it is possible to prevent water from passing through pores provided that the pore size of the porous polytetrafluoroethylene film is sufficiently small. Therefore, the porous polytetrafluoroethylene film is capable of exhibiting waterproofness. Furthermore, since water vapor is enabled to pass through the communicated pores of the porous polytetrafluoroethylene film, the porous polytetrafluoroethylene film is also capable of exhibiting moisture permeability.

Likewise, as shown in JP Patent Application Publication (Kokai) No.2009-228187, porous polyurethane film is also known as a thin film exhibiting both waterproofness and moisture permeability. This porous polyurethane film is also provided with fine pores. This porous polyurethane film is constructed such that a large number of fine pores are communicated with each other.

Since polyurethane itself is hydrophobic, a porous polyurethane film is capable of preventing water from entering into the pores of the porous polyurethane film, provided that the size of the pores is sufficiently small. Accordingly, the porous polyurethane film is provided with waterproofness. Further, since water vapor is enabled to pass through the communicated pores of the porous polyurethane film, the porous polyurethane film is also provided with moisture permeability.

In the case of porous polytetrafluoroethylene film, it is featured in that the nodes thereof can be easily displaced by external force and that once the nodes are displaced, they are hardly capable of turning back to their original positions. Namely, the porous polytetrafluoroethylene film is a material which is prone to plastically deform.

For example, when this porous polytetrafluoroethylene film is used as a material for shoes, the film is pressed by an external force during walking. When this porous polytetrafluoroethylene film is used as a material for clothing, the film receives an external force during the movement of a person wearing the clothing or during the washing of the clothing. Due to these external forces described above, part of fibrous fibril is caused to deform.

There is also a problem which may arise as clothing made of porous polytetrafluoroethylene film is washed using a detergent containing a surfactant. More specifically, on the occasion of drying clothing after washing, the detergent may be left remained on the clothing. Specifically, an aqueous solution containing the detergent and a relatively small quantity of water as a result of evaporation thereof may be left remained on the surface of porous polytetrafluoroethylene film, resulting in an increase in concentration of the detergent and in a decrease of the surface tension.

On the other hand, an aqueous solution containing the detergent and a relatively large quantity of water in spite of evaporation thereof may be also left remained on the surface of porous polytetrafluoroethylene film. In this case, the concentration of the detergent is not so increased and the surface tension is not caused to decrease so much. Due to this difference in surface tension of the aqueous solution on the surface of porous polytetrafluoroethylene film, a distribution of capillary force to be applied to the nodes is caused to generate all over the porous polytetrafluoroethylene film. As a result of the generation of the distribution of capillary force, part of nodes is caused to displace.

When part of nodes is caused to displace, the size of pore surrounded by the nodes and fibrous fibril is also caused to change. If the size of pore is increased, it is no longer possible to prevent water from permeating into the pores even if polytetrafluoroethylene is hydrophobic in itself. As a result, the waterproofness of the porous polytetrafluoroethylene film would be remarkably deteriorated.

Porous polyurethane film is excellent in elasticity. Namely, this porous polyurethane film is a material which can be easily elastically deformed.

However, when an external force is repeatedly applied to the porous polyurethane film, peripheries of pores are caused to destroy, thereby increasing the size of pores. If the size of pores is increased, it is no longer possible to prevent water from permeating into the pores even if polyurethane is hydrophobic in itself. As a result, the waterproofness of the porous polyurethane film is remarkably deteriorated.

CN 101 135 115 B discloses a preparation process of poromeric teflon fabric. A small amount of natural plant powder is added into polyurethane coating solution and the powder is retained in the polyurethane film after the solvent is volatilized. The powder can absorb moisture to expand to reach the waterproof performance of the material, shrink in dry condition to increase the porosity of the polyurethane film and to increase the water vapor permeability, raise the harsh feeling of polyurethane film and reduce stickiness.

### BRIEF SUMMARY OF THE INVENTION

In view of aforementioned circumstances, an object of the present invention is to provide a moisture permeable waterproof composite film which is capable of suppressing the deterioration of waterproofness even if the film is subjected to an external force. Another object of the present invention is to provide a moisture permeable waterproof fabric incorporated with the aforementioned moisture permeable waterproof composite film.

In order to solve the aforementioned problems, there is provided a moisture permeable waterproof composite film as specified in claim 1. The film is constructed such that it is formed of a laminate comprising of at least one layer of porous polytetrafluoroethylene film, and at least one layer of porous polyurethane film.

Namely, this moisture permeable waterproof composite film is constituted by a moisture permeable waterproof composite layer which is easily enabled to plastically deform as compared with a porous polyurethane layer and by a porous polyurethane layer which is easily enabled to elastically deform as compared with a porous polytetrafluoroethylene layer.

In the case of the porous polytetrafluoroethylene layer, even if the nodes thereof are displaced due to the application of external force to the moisture permeable waterproof composite film, the nodes are enabled to return to their original positions owing to the elastic force of the porous polyurethane layer. Since the positions of the nodes are enabled to return to their original positions, the enlargement of pores of the porous polytetrafluoroethylene layer can be suppressed. Accordingly, it is now possible to prevent the waterproofness of the porous polytetrafluoroethylene layer from being deteriorated.

In the case of the porous polyurethane layer, even if an external force is applied to the moisture permeable waterproof composite film, the porous polyurethane layer is prevented from being expanded due to the presence of the porous polytetrafluoroethylene layer. As a result, it is now possible to prevent the moisture permeability and waterproofness of the porous polyurethane layer from being deteriorated.

Since the moisture permeable waterproof composite film of claim 1 is formed of a laminate constituted by a porous polytetrafluoroethylene layer which is excellent in moisture permeability and by a porous polyurethane layer which is also excellent in moisture permeability, it is possible to secure sufficient moisture permeability.

The moisture permeable waterproof composite film of claim 2 is featured in that, in accordance with the moisture permeable waterproof composite film of claim 1, it is formed of a 2-ply structure consisting of a porous polytetrafluoroethylene film and a porous polyurethane layer, which are laminated in the mentioned order; a 2-ply structure consisting of a porous polyurethane layer and a porous polytetrafluoroethylene film, which are laminated in the mentioned order; a 3-ply consisting of a porous polytetrafluoroethylene film, a porous polyurethane layer and a porous polytetrafluoroethylene film, which are laminated in the mentioned order; or a 3-ply consisting of a porous polyurethane layer, a porous polytetrafluoroethylene film and a porous polyurethane layer, which are laminated in the mentioned order.

The moisture permeable waterproof composite film of claim 2 is, as in the case of the moisture permeable waterproof composite film of claim 1, capable of suppressing the deterioration of waterproofness while retaining moisture permeability.

The moisture permeable waterproof composite film of claim 3 is featured in that, in accordance with the moisture permeable waterproof composite film of claim 1 or 2, the thickness of the porous polyurethane layer is not more than 100µm.

The moisture permeable waterproof composite film of claim 4 is featured in that, in accordance with the moisture permeable waterproof composite film of any one of claim 1 to 3, the moisture permeability thereof as determined by JIS L 1099A-1 method is not less than 5000g/m² ·24 hours.

The moisture permeable waterproof composite film of claim 5 is featured in that, in accordance with the moisture permeable waterproof composite film of any one of claim 1 to 4, the water pressure resistance thereof after a repetition of 10∼50 times of washing as determined by JIS L 0217 103 method is not less than 10000mm.

The moisture permeable waterproof composite film of claim 6 is featured in that, in accordance with the moisture permeable waterproof composite film of any one of claim 1 to 5, the porous polyurethane layer and the porous polytetrafluoroethylene layer are partially adhered face-to-face to each other.

The moisture permeable waterproof composite film of claim 7 is featured in that, in accordance with the moisture permeable waterproof composite film of any one of claim 1 to 6, the porous polyurethane layer is formed of a porous polyurethane film.

The moisture permeable waterproof composite film of present invention is featured in the porous polyurethane layer is provided with routes which enable gas to pass from one surface of the porous polyurethane layer to the other surface thereof. The existence of the routes which enable gas to pass from one surface of the porous polyurethane layer to the other surface thereof would be obvious from the range of values of Gurley permeability resistance of the moisture permeable waterproof composite film as described in claim 1.

The moisture permeable waterproof fabric of claim 8 is constructed to contain a moisture permeable waterproof composite film as described in any one of claims 1 to 7.

The moisture permeable waterproof fabric of claim 9 is featured in that, in accordance with the moisture permeable waterproof fabric of claim 8, the water pressure resistance thereof after a repetition of 10∼50 times of washing as determined by JIS L 0217 103 method is not less than 10000mm.

The moisture permeable waterproof fabric of claim 10 is featured in that, in accordance with the moisture permeable waterproof fabric of claim 8 or 9, the water pressure resistance thereof after a repetition of 200 times of frictional loading is not less than 6000mm.

According to the inventions set forth in any of claims 1 to 7, the moisture permeable waterproof composite film described therein is enabled to suppress the deterioration of waterproofness while retaining moisture permeability. Further, according to the inventions set forth in any of claims 8 to 10, the moisture permeable waterproof fabrics described therein are enabled to suppress the deterioration of waterproofness while retaining moisture permeability.

### DETAILED DESCRIPTION OF THE INVENTION

Next, the moisture permeable waterproof composite film representing one aspect of the present invention will be explained. This moisture permeable waterproof composite film is formed of a laminate comprising of a porous polytetrafluoroethylene layer, and a porous polyurethane layer.

This porous polytetrafluoroethylene layer is formed of a porous polytetrafluoroethylene film. The manufacture of the porous polytetrafluoroethylene film can be carried out according to the following procedures. First of all, porous polytetrafluoroethylene powder is mixed with a lubricant and then the resultant mixture is molded to obtain a preform. Thereafter, this preform is extruded through an orifice to obtain an extruded product of polytetrafluoroethylene having a stretched rod-like or ribbon-like configuration. Then, this polytetrafluoroethylene extruded product is subjected to rolling in the extruded direction by making use of a single-or multiple-stage pressure roll, thereby obtaining a sheet-like porous polytetrafluoroethylene film.

The porous polytetrafluoroethylene layer is provided with a large number of fine pores, each surrounded by nodes and fibrous fibril. Namely, this porous polytetrafluoroethylene layer is constructed such that a large number of fine pores are communicated with each other. Therefore, this porous polyurethane layer is provided with routes which enable gas to pass from one surface of the porous polyurethane layer to the other surface thereof.

This porous polytetrafluoroethylene film has a thickness of 40µm, a water pressure resistance of 23000mm (in the presence of a patch), a moisture permeability of 11300g/m² ·24 hours based on JIS L 1099A-1 method and a moisture permeability of 11300g/m² ·24 hours based on JIS L 1099B-1 method.

The porous polyurethane layer is formed of a porous polyurethane film. The manufacture of the porous polyurethane film can be carried out according to the following procedures. First of all, porous polyurethane resin is kneaded together with a solvent and an inorganic salt to prepare a kneaded composition. Then, this kneaded composition is coated on the surface of mold-releasing base material such as release paper and then allowed to coagulate in water. Thereafter, the film of the kneaded composition is peeled from the base material to obtain a sheet-like porous polyurethane film.

A sheet-like porous polyurethane film 1 which is manufactured by Hiramatsu Sangyo Co., Ltd. is featured to have a film thickness of 30µm, a water pressure resistance of 25000mm, a moisture permeability of 12700g/m² ·24 hours based on JIS L 1099A-1 method, a pore size of 0.3∼3µm, and Gurley permeability resistance of 125.0 seconds.

A sheet-like porous polyurethane film 2 which is manufactured by Hiramatsu Sangyo Co., Ltd. is featured to have a film thickness of 30µm, a water pressure resistance of 12000mm, a moisture permeability of 10900g/m² ·24 hours based on JIS L 1099A-1 method, a pore size of 0.3∼3µm, and Gurley permeability resistance of 24.0 seconds.

A porous polyurethane layer which is made of the porous polyurethane film 1 or the porous polyurethane film 2 is provided with a large number of fine pores. Namely, this porous polyurethane layer is constructed such that a large number of fine pores formed therein are enabled to communicate with each other. Therefore, this porous polyurethane layer is provided with routes which enable gas to pass from one surface of the porous polyurethane layer to the other surface thereof.

Followings are explanations on the merits of the polyurethane layer which is provided with routes which enable gas to pass from one surface thereof to the other surface thereof (hereinafter referred to as an air-permeable polyurethane layer) as compared with a polyurethane layer which is not provided with routes which enable gas to pass from one surface thereof to the other surface thereof (hereinafter referred to as an impervious polyurethane layer).

In the case of the impervious polyurethane layer, water molecules are enabled to pass through the impervious polyurethane layer only when the impervious polyurethane layer is made hydrophilic. More specifically, the following water-permeation model would be conceivable. First of all, water vapor is brought into contact with one of the surfaces of impervious polyurethane layer. Then, coordinate bonding takes place between water molecules and the hydrophilic portions of impervious polyurethane layer. Thereafter, the water molecules are allowed to diffuse throughout the interior of the impervious polyurethane layer. Then, the water molecules are brought into contact with the other surface of impervious polyurethane layer, thereby releasing the coordinate bonding between the water molecules and the hydrophilic portions of impervious polyurethane layer. As a result, the water molecules are allowed to evaporate and separate from the other surface of impervious polyurethane layer.

In the case of the aforementioned water-permeation model of the impervious polyurethane layer, in order to enable water vapor (water molecules) to pass through the impervious polyurethane layer, it is necessary for water molecules to surpass the energy barriers such as the coordinate bonding between the water molecules and the hydrophilic portions of impervious polyurethane layer and the releasing of the water molecules from the coordinate bonding. In the case of the moisture permeability measurements according to JIS L 1099A-1 method, the measurements are carried out in an isothermal environment. In this isothermal environment, the temperature of one of surfaces of a sample to be measured as well as the temperature of the opposite surface thereof prescribed therein is set to 40°C. Therefore, the moisture permeability measurements according to JIS L 1099A-1 method are designed to be carried out under the conditions where the energy needed for water vapor (water molecules) to pass through the impervious polyurethane layer can be easily supplied.

However, in the environments where a moisture permeable waterproof composite film incorporated with a polyurethane layer is actually used, it would be usually inconceivable that the temperature of opposite surfaces of the moisture permeable waterproof composite film become as high as 40°C. Rather, since outside air temperature becomes lower in winter, the moisture permeable waterproof composite film is likely to be brought into the conditions where a sufficient degree of energy needed for water vapor (water molecules) to pass through the impervious polyurethane layer can be hardly supplied.

In the case of the impervious polyurethane layer, even if it is possible to secure a preferable value of moisture permeability on the basis of JIS L 1099A-1 method, there are possibilities that it cannot secure a sufficient degree of moisture permeability in the actual use thereof. Therefore, there may be a case where users thereof cannot obtain a sufficient comfortableness when a product of the moisture permeable waterproof composite film incorporated with the polyurethane layer is actually used by the users.

It may be possible to decrease the thickness of impervious polyurethane layer in order to secure a sufficient degree of moisture permeability of impervious polyurethane layer. However, the durability of impervious polyurethane layer would be prominently deteriorated by the thinning of the impervious polyurethane layer.

Whereas, in the case of the air-permeable polyurethane layer according to the present invention, it is provided with routes which enable water vapor to pass as it is from one surface of the air-permeable polyurethane layer to the other surface thereof. Therefore, in the case of actually using the product of moisture permeable waterproof composite film having the air-permeable polyurethane layer of the present invention, it is possible to give the users thereof a sufficient comfortableness without being badly influenced by the temperature of outside air.

Further, if it is desired to improve the durability of the air-permeable polyurethane layer while sufficiently retaining air permeability, the thickness of the air-permeable polyurethane layer can be increased.

The adhesion between the porous polytetrafluoroethylene film and the porous polyurethane film can be executed by making use of an adhesive. The adhesive useful in this case can be manufactured according to the following procedures. At first, a polyether-based urethane base resin, which is available in the market, is prepared, this urethane base resin being manufactured through a reaction between 4,4'-methylene bis(cyclohexylisocyanate) and at least polyethylene glycol. This base resin is then dissolved in a mixed solvent comprising methyl ethyl ketone, toluene and isopropyl alcohol (1:1:0.5) to obtain 23 wt% solution of the base resin. Then, a trimer of hexamethylene diisocyanate having a cyanuric skeleton is added as a crosslinking agent to the mixed solvent having the base resin dissolved therein at a ratio of 6 parts by weight based on one part by weight of the solution, thereby manufacturing the adhesive.

Next, examples specifically representing a 2-ply structure of moisture permeable waterproof composite film and comparative examples for comparing with the examples will be explained.

### Example 1

Example 1 is directed to a moisture permeable waterproof composite film which is composed of a laminate of a porous polytetrafluoroethylene film and a porous polyurethane film 1. In the manufacture of this composite film, an adhesive is coated at first on a prescribed adhering surface of the porous polyurethane film 1 by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Next, the porous polyurethane film 1 having the adhesive coated thereon is subjected to drying for one minute at a temperature of 120°C. The adhesive is coated in a dot-like pattern on a prescribed adhering surface of the porous polyurethane film 1, each dot having a configuration of square of 0.40mm x 0.40mm. One of the diagonal lines of this square is in parallel with the delivering direction of the porous polyurethane film 1. Therefore, the other of the diagonal lines of this square is orthogonal to the delivering direction of the porous polyurethane film 1.

Then, a porous polytetrafluoroethylene film is superimposed on the prescribed adhering surface of the porous polyurethane film 1. The resultant laminate of films is passed through an interstice between a metal roll and a rubber roll at room temperature and press-bonded at a linear pressure of 49N/cm. Then, these press-bonded films are subjected to aging for 48 hours at room temperature, thereby accomplishing the manufacture of the moisture permeable waterproof composite film of Example 1 which is composed of a laminate of a porous polytetrafluoroethylene film and a porous polyurethane film 1. In this composite film, the porous polytetrafluoroethylene film and the porous polyurethane film 1 are partially bonded to each other through the contacting surface portions thereof.

### Example 2

Example 2 is directed to a moisture permeable waterproof composite film which is composed of a laminate of a porous polytetrafluoroethylene film and a porous polyurethane film 2. By following the same procedures as described in Example 1, the manufacture of the moisture permeable waterproof composite film of Example 2 which is composed of a laminate of a porous polytetrafluoroethylene film and a porous polyurethane film 2 is accomplished. In this composite film, the porous polytetrafluoroethylene film and the porous polyurethane film 2 are partially bonded to each other through the contacting surface portions thereof.

### Comparative Example 1

Comparative Example 1 is directed to a moisture permeable waterproof monolayer film which is composed of a porous polyurethane film 1 manufactured by Hiramatsu Sangyo Co., Ltd.

### Comparative Example 2

Comparative Example 2 is directed to a moisture permeable waterproof monolayer film which is composed of a porous polyurethane film 2 manufactured by Hiramatsu Sangyo Co., Ltd.

### Comparative Example 3

Comparative Example 3 is directed to a moisture permeable waterproof monolayer film which is composed of a porous polytetrafluoroethylene film.

The moisture permeable waterproof composite films of Examples 1 and 2 and the moisture permeable waterproof monolayer films of Comparative Examples 1∼3 were measured as follows to determine the characteristics of these films.

In the case of the composite films of Examples 1 and 2, the water pressure resistance from the porous polyurethane film side and the water pressure resistance from the porous polytetrafluoroethylene film side were respectively measured according to JIS L 1092B method. Then, the moisture permeability of these composite films from the porous polyurethane film side and the moisture permeability of these composite films from the porous polytetrafluoroethylene film side were respectively measured according to JIS L 1099A-1 method.

In the case of Comparative Examples 1 and 2, the water pressure resistance of each of the porous polyurethane films 1 and 2 was measured according to JIS L 1092B method. Further, the moisture permeability of these films 1 and 2 was measured according to JIS L 1099A-1 method.

In the case of Comparative Example 3, the water pressure resistance of the porous polytetrafluoroethylene film was measured according to JIS L 1092B method. Further, the moisture permeability of the polytetrafluoroethylene film was measured according to JIS L 1099A-1 method.

The composite films of Examples 1 and 2 and the monolayer films of Comparative Examples 1∼3 were measured to determine Gurley permeability resistance thereof based on JIS L 1096 B-1 method which is designed to measure the time needed for 100mL of air to pass through the films.

Then, the composite films of Examples 1 and 2 and the monolayer films of Comparative Examples 1∼3 were subjected to a washing test based on JIS L 0217 103 method wherein the washing was repeated 50 times.

Thereafter, the water pressure resistance of each of the composite films of Examples 1 and 2 and each of the monolayer films of Comparative Examples 1∼3 after the repetition of 50 times of washing test was measured again.

In the measurement of the water pressure resistance, a laminate consisting of a pair of polyester mesh having a pore size of 70 meshes and a thickness of 0.15mm was employed as a patch in order to prevent these composite films and monolayer films from being fractured by the water pressure. The results of measurement obtained are shown in Table 1.

**Table 1**

| Items | Unit | Example 1 | Example 2 | Comp. Example 1 | Comp. Example 2 | Comp. Example 3 |
|---|---|---|---|---|---|---|
| Porous polyurethane layer | - | Porous polyurethane film 1 | Porous polyurethane film 2 | Porous polyurethane film 1 | Porous polyurethane film 2 | None |
| Porous polytetrafluoroethylane layer | - | Porous polytetrafluoroethylene film | Porous polytetrafluoroethylene film | None | None | Porous polytetrafluoroethylene film |
| Moisture permeability from porous polyurethane layer side | g/m2·24h | 10,500 | 10,800 | 12,700 | 10,900 | - |
| Moisture permeability from porous polytetrafluoroethylene layer side | g/m2·24h | 10,000 | 10,300 | - | - | 11,300 |
| Gurley permeability resistance | sec/100ml | 600.0 | 54.0 | 125.0 | 24.0 | 0.3 |
| Water pressure resistance from porous polyurethane layer side (before washing test) | mm | 45,000 | 30,000 | 25,000 | 12,000 | - |
| Water pressure resistance from porous polyurethane layer side (after 50 times of washing test) | mm | 22,000 | 10,000 | 13,000 | 7,000 | - |
| Water pressure resistance from porous polytetrafluoroethylene layer side (before washing test) | mm | 45,000 | 30,000 | - | - | 23,000 |
| Water pressure resistance from porous polytetrafluoro-ethylene layer side (after 50 times of washing test) | mm | 22,000 | 10,000 | - | - | 1,500 |

As seen from Table 1, the moisture permeable waterproof composite films of Examples 1 and 2 indicated almost the same degree of moisture permeability as that of the moisture permeable waterproof monolayer films of Comparative Examples 1∼3. For example, in the case of clothes where the moisture permeable waterproof composite film or the moisture permeable waterproof monolayer film is used, as long as the moisture permeability of the moisture permeable waterproof composite film or the moisture permeable waterproof monolayer film is not less than 5000g/m² ·24 hours, it is possible to enable moisture to sufficiently pass from the inside of the clothes to the outside thereof through the moisture permeable waterproof composite film or the moisture permeable waterproof monolayer film. In the case of the composite films of Examples 1 and 2, both of the moisture permeability as measured from the porous polyurethane layer side and the moisture permeability as measured from the porous polytetrafluoroethylene film side indicated more than 10000g/m² ·24 hours, thereby demonstrating a sufficient moisture permeability.

In the case of the moisture permeable waterproof film, when the Gurley permeability resistance thereof is less than 50 seconds, the durability thereof against washing or frictional load would become insufficient. On the other hand, when the Gurley permeability resistance thereof is more than 1000 seconds, the moisture permeability would become insufficient. Therefore, the Gurley permeability resistance of the moisture permeable waterproof film should preferably be confined within the range of 50∼1000 seconds. In the case of the composite film of Example 1, the Gurley permeability resistance thereof was 600.0 and in the case of the composite film of Example 2, the Gurley permeability resistance thereof was 54.0, thus indicating that the Gurley permeability resistance of these composite films was confined within the aforementioned preferable range.

It will be recognized from the comparison between Example 1 and Comparative Example 1 that as compared with the monolayer film of Comparative Example 1, the moisture permeable waterproof composite film of Example 1 is superior in water pressure resistance as measured from the porous polyurethane layer side before washing as well as after washing. It will be also recognized from the comparison between Example 1 and Comparative Example 3 that as compared with the monolayer film of Comparative Example 3, the moisture permeable waterproof composite film of Example 1 is superior in water pressure resistance as measured from the porous polytetrafluoroethylene layer side before washing as well as after washing.

If the moisture permeable waterproof composite film is to be used as a material for clothes for example, the water pressure resistance thereof after 50 times of washing should preferably be 10000mm or more. In the case of the monolayer film of Comparative Example 3 however, the water pressure resistance thereof as measured from the porous polytetrafluoroethylene layer side after 50 times of washing was decreased to 1500mm. Whereas, in the case of the composite film of Example 1, the water pressure resistance thereof as measured from the porous polytetrafluoroethylene layer side after 50 times of washing was as high as 22000mm, thus indicating a sufficient durability.

It will be recognized from the comparison between Example 2 and Comparative Example 2 that as compared with the monolayer film of Comparative Example 2, the moisture permeable waterproof composite film of Example 2 is superior in water pressure resistance as measured from the porous polyurethane layer side before washing as well as after washing. In the case of Comparative Example 2 in particular, the water pressure resistance thereof as measured from the porous polyurethane layer side after the washing was decreased to 7000mm. Whereas, in the case of the composite film of Example 2, the water pressure resistance thereof as measured from the porous polyurethane layer side after the washing was as high as 10000mm, thus indicating a sufficient durability.

It will be recognized from the comparison between Example 2 and Comparative Example 3 that as compared with the monolayer film of Comparative Example 3, the composite film of Example 2 is superior in water pressure resistance as measured from the porous polytetrafluoroethylene layer side before washing as well as after washing. In the case of Comparative Example 3 in particular, the water pressure resistance thereof as measured from the porous polytetrafluoroethylene layer side after the washing was decreased to 1500mm. Whereas, in the case of the composite film of Example 2, the water pressure resistance thereof as measured from the porous polytetrafluoroethylene layer side after the washing was as high as 10000mm, thus indicating a sufficient durability.

Accordingly, it will be recognized that the moisture permeable waterproof composite films of Examples 1 and 2 are capable of retaining sufficient moisture permeability. Furthermore, it will be recognized that the moisture permeable waterproof composite films of Examples 1 and 2 are capable of suppressing the deterioration of water pressure resistance (representing waterproofness) even if the external force brought about by washing treatment is repeatedly applied to the composite films.

Next, Example 3 representing a 3-ply structure of moisture permeable waterproof composite film will be explained.

### Example 3

Example 3 is directed to a 3-ply structure of moisture permeable waterproof composite film which is composed of a laminate of a porous polyurethane film 1, a porous polytetrafluoroethylene film and a porous polyurethane film 1, these films being laminated in the mentioned order. With respect to the bonding of these films, it was accomplished by repeating the same procedures as described in Example 1. In this composite film, the porous polytetrafluoroethylene film and the porous polyurethane film 1 are partially bonded to each other through the contacting surface portions thereof.

### Example 4

Example 4 is directed to a 3-ply structure of moisture permeable waterproof composite film which is composed of a laminate of a porous polytetrafluoroethylene film, a porous polyurethane film 1 and a porous polytetrafluoroethylene film, these films being laminated face-to-face in the mentioned order. With respect to the bonding of these films, it was accomplished by repeating the same procedures as described in Example 1. In this composite film, the porous polytetrafluoroethylene film and the porous polyurethane film 1 are partially bonded to each other through the contacting surface portions thereof.

The composite films of Examples 3 and 4 were measured to determine the moisture permeability, Gurley permeability resistance and water pressure resistance before and after a washing treatment of these composite films by following the same procedures as described in Examples 1 and 2. The results obtained are shown in Table 2.

**Table 2**

| Items | Unit | Example 3 | Example 4 |
|---|---|---|---|
| Porous polyurethane layer | - | Porous polyurethane film 1 | Porous polyurethane film 1 |
| Porous polytetrafluoroethylene film layer | - | Porous polytetrafluoroethylene film | Porous polytetrafluoroethylene film |
| Structure of moisture permeable waterproof composite film | - | Porous polyurethane film 1/porous polytetrafluoroethylene film/porous polyurethane film 1 | Porous polytetrafluoroethylene film/porous polyurethane film 1/porous polytetrafluoroethylene film |
| Moisture permeability from porous polyurethane layer side | g/m2·24h | 9,600 | - |
| Moisture permeability from porous polytetrafluoroethylene layer side | g/m2·24h | - | 8,700 |
| Gurley permeability resistance | sec/100ml | 985.0 | 824.0 |
| Water pressure resistance from porous polyurethane layer side (before washing test) | mm | 48,000 | - |
| Water pressure resistance from porous polyurethane layer side (after 50 times of washing test) | mm | 24,500 | - |
| Water pressure resistance from porous polytetrafluoroethylene layer side (before washing test) | mm | - | 49,500 |
| Water pressure resistance from porous polytetrafluoroethylene layer side (after 50 times of washing test) | mm | - | 23,000 |

As seen from Table 2, the moisture permeable waterproof composite films of Examples 3 and 4 indicated a moisture permeability of not less than 5000g/m² ·24 hours. Therefore, it is possible to enable moisture to sufficiently pass from the inside of the clothes to the outside thereof through the moisture permeable waterproof composite film.

As described above, the Gurley permeability resistance of the moisture permeable waterproof film should preferably be confined within the range of 50∼1000 seconds. In the case of the composite film of Example 3, the Gurley permeability resistance thereof was 985.0 and in the case of the composite film of Example 4, the Gurley permeability resistance thereof was 824.0, thus indicating that the Gurley permeability resistance of these composite films was confined within the aforementioned preferable range.

If the moisture permeable waterproof composite film is to be used as a material for clothes for example, the water pressure resistance thereof after 50 times of washing should preferably be 10000mm or more. In the case of the composite film of Example 3, the water pressure resistance thereof as measured from the porous polytetrafluoroethylene layer side after washing was as high as 24500mm, thus indicating a sufficient durability. In the case of the composite film of Example 4, the water pressure resistance thereof as measured from the porous polyurethane layer side after washing was as high as 23000mm, thus indicating a sufficient durability.

Accordingly, it will be recognized that the moisture permeable waterproof composite films of Examples 3 and 4 are capable of retaining sufficient moisture permeability. Furthermore, it will be recognized that the moisture permeable waterproof composite films of Examples 3 and 4 are capable of suppressing the deterioration of water pressure resistance (representing waterproofness) even if the external force brought about by washing treatment is repeatedly applied to the composite films.

Next, there will be explained about moisture permeable waterproof fabric representing one aspect of the present invention, this fabric being constructed to contain a moisture permeable waterproof composite film. This moisture permeable waterproof fabric is formed of a laminate consisting of an outer material, the moisture permeable waterproof composite film and a lining.

In the preparation of the outer material, semidull thread having a circular cross-section and made of 44dtex-34 filaments of nylon 6 was employed for the warp yarn and the weft yarn. A pasting treatment was applied to the warp yarn and then these yarns were weaved in a water jet room so as to obtain a density of 135 x 115 threads/2.54cm. Then, fabric thus weaved was subjected to scouring. Thereafter, the scoured fabric was subjected to a heat-setting treatment for 40 seconds at a temperature of 170°C so as to obtain a density of 140 x 120 threads/2.54cm. Then, the resultant fabric was dyed and dried and subjected to a finishing heat-setting treatment at a temperature of 160°C.

Then, the fabric was subjected to a water repellent treatment using a fluorocarbon-based water repellent. In this water repellent treatment, the fabric was dipped in an aqueous dispersion containing 3 wt% of "Asahigard" AG710 (a water repellent from Meisei Chemical Works, Ltd.). Then, the resultant fabric was squeezed at a squeezing ratio of 40% and subjected to drying heat treatment for 30 seconds at a temperature of 130°C. Additionally, the fabric was subjected to drying heat treatment for 30 seconds at a temperature of 170°C, thereby accomplishing the manufacture of the outer material.

In the preparation of the lining, semidull thread having a circular cross-section and made of 33dtex-24 filaments of nylon 6 ·6 was employed. The semidull thread was weaved using a single tricot machine. Then, the resultant fabric was dyed and dried. Thereafter, the resultant fabric was subjected to a finishing heat-setting treatment so as to obtain a density of 29 wells/2.54cm and 46 courses/2.54cm, thereby accomplishing the manufacture of the lining.

With respect to the porous polytetrafluoroethylene film, the porous polyurethane film and the adhesive, those described above can be used.

Followings are explanations on the examples specifically representing a moisture permeable waterproof fabric which is constructed to contain a moisture permeable waterproof composite film and on the comparative examples for comparing with the examples.

### Example 5

In the manufacture of this fabric, an adhesive is coated at first on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Then, the outer material having the adhesive coated thereon is subjected to drying for one minute at a temperature of 120°C. The adhesive is coated in a dot-like pattern on a prescribed adhering surface of the outer material, each dot having a configuration of square of 0.40mm x 0.40mm. One of the diagonal lines of this square is in parallel with the delivering direction of the outer material. Therefore, the other of the diagonal lines of this square is orthogonal to the delivering direction of the outer material.

Then, the moisture permeable waterproof composite film of Example 1 is superimposed on the prescribed adhering surface of the outer material. In this case, the porous polyurethane film 1 side of the composite film is positioned to face the outer material. The resultant laminated fabric is passed through an interstice between a metal roll and a rubber roll at room temperature and press-bonded at a linear pressure of 49N/cm. Then, this press-bonded laminated fabric is subjected to aging for 48 hours at room temperature.

Further, by making use of the gravure coater equipped with a gravure roll, the aforementioned adhesive is coated on the surface of the porous polytetrafluoroethylene film constituting the laminated fabric.

The laminated fabric having the adhesive coated thereon is subjected to drying for one minute at a temperature of 120°C. The adhesive is coated in a dot-like pattern on the surface of the porous polytetrafluoroethylene film, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

Next, the lining is superimposed on the surface of the porous polytetrafluoroethylene film of the laminated fabric. The resultant laminated fabric having the lining laminated thereon is passed through an interstice between a metal roll and a rubber roll at room temperature and press-bonded at a linear pressure of 49N/cm. Then, this press-bonded laminated fabric is subjected to aging for 48 hours at room temperature, thereby accomplishing the manufacture of the moisture permeable waterproof fabric of Example 5 which is constructed to contain the moisture permeable waterproof composite film. The moisture permeable waterproof fabric of Example 5 is formed of a 4-ply structure comprising the outer material/the porous polyurethane film 1/the porous polytetrafluoroethylene film/the lining. The porous polytetrafluoroethylene film and the porous polyurethane film 1 are partially bonded to each other through the contacting surface portions thereof.

### Example 6

First of all, an adhesive is coated on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Next, the outer material having the adhesive coated thereon is subjected to drying for one minute at a temperature of 120°C. The adhesive is coated in a dot-like pattern on a prescribed adhering surface of the outer material, each dot having a configuration of square of 0.40mm x 0.40mm. One of the diagonal lines of this square is in parallel with the delivering direction of the outer material, and hence the other of the diagonal lines of this square is orthogonal to the delivering direction of the outer material.

Then, the porous polyurethane film 1 is superimposed on the prescribed adhering surface of the outer material. The resultant laminated fabric A is passed through an interstice between a metal roll and a rubber roll at room temperature and press-bonded at a linear pressure of 49N/cm. Then, this press-bonded laminated fabric A is subjected to aging for 48 hours at room temperature.

Further, by making use of the gravure coater equipped with a gravure roll, the aforementioned adhesive is coated on the surface of the lining.

The lining having the adhesive coated thereon is subjected to drying for one minute at a temperature of 120°C. The adhesive is coated in a dot-like pattern on the surface of the lining, each dot having a configuration of square of 0.40mm x 0.40mm. One of the diagonal lines of this square is in parallel with the delivering direction of the lining, and hence the other of the diagonal lines of this square is orthogonal to the delivering direction of the lining.

A porous polytetrafluoroethylene film is superimposed on the lining to obtain a laminated fabric B, which is then passed through an interstice between a metal roll and a rubber roll at room temperature and press-bonded at a linear pressure of 49N/cm. Then, this press-bonded laminated fabric B is subjected to aging for 48 hours at room temperature.

Next, an adhesive is coated on the surface of the porous polytetrafluoroethylene film of the laminated fabric B. This adhesive is coated in a dot-like pattern on the surface of the porous polytetrafluoroethylene film, each dot having a configuration of square of 0.40mm x 0.40mm. One of the diagonal lines of this square is in parallel with the delivering direction of the laminated fabric B, and hence the other of the diagonal lines of this square is orthogonal to the delivering direction of the laminated fabric B.

Next, the porous polyurethane film 1 side of the laminated fabric A is superimposed on the porous polytetrafluoroethylene film side of the laminated fabric B. The resultant laminated fabric is then passed through an interstice between a metal roll and a rubber roll at room temperature and press-bonded at a linear pressure of 49N/cm. Then, this press-bonded laminated fabric is subjected to aging for 48 hours at room temperature, thereby accomplishing the manufacture of the moisture permeable waterproof fabric of Example 6 which is constructed to contain the moisture permeable waterproof composite film. The moisture permeable waterproof fabric of Example 6 is formed of a 4-ply structure comprising the outer material/the porous polyurethane film 1/the porous polytetrafluoroethylene film/the lining. The porous polytetrafluoroethylene film and the porous polyurethane film 1 are partially bonded to each other through the contacting surface portions thereof.

### Example 7

In the case of the moisture permeable waterproof fabric of Example 7, the moisture permeable waterproof composite film of Example 1 is laminated such that the porous polytetrafluoroethylene film side thereof is superimposed on the surface of the outer material. With respect to other features of fabric, they are constructed in the same manner as described in Example 5. The moisture permeable waterproof fabric of Example 7 is formed of a 4-ply structure comprising the outer material/the porous polytetrafluoroethylene film/the porous polyurethane film 1/the lining. The porous polytetrafluoroethylene film and the porous polyurethane film 1 are partially bonded to each other through the contacting surface portions thereof.

### Comparative Example 4

The moisture permeable waterproof fabric of Comparative Example 4 is formed of a 3-ply structure comprising an outer material/the porous polytetrafluoroethylene film/a lining.

### Comparative Example 5

The moisture permeable waterproof fabric of Comparative Example 5 is formed of a 3-ply structure comprising an outer material/the porous polyurethane film/a lining.

The characteristics of the moisture permeable waterproof fabric of Examples 5∼7 and of the moisture permeable waterproof fabric of Comparative Examples 4 and 5 were measured as follows.

The moisture permeable waterproof fabrics of Examples 5∼7 and of the moisture permeable waterproof fabric of Comparative Examples 4 and 5 were measured to determine the water pressure resistance from the outer material side as well as the water pressure resistance from the lining side according to JIS L 1092B method, and the moisture permeability from the lining side according to JIS L 1099A-1 method.

Next, the moisture permeable waterproof fabrics of Examples 5∼7 and of the moisture permeable waterproof fabric of Comparative Examples 4 and 5 were subjected to 50 times of the washing test according to JIS L 0217 103 method.

Before being subjected to the washing test, test pieces each having a size of 50mm x 200mm were prepared from each of the moisture permeable waterproof fabric of Examples 5∼7 and each of the moisture permeable waterproof fabric of Comparative Examples 4 and 5. In the preparation of these test pieces, the moisture permeable waterproof fabric of each of these examples having a size of 200mm x 20mm was equally bent twice in the same longitudinal direction to prepare each of the test pieces.

By making use of a Scott tester, each of the test pieces was subjected to a friction test based on JIS L 1096 frictional strength B method. In the employment of the Scott tester, the opposite ends of test piece, 15mm in width, were gripped by a couple of chucks opened in advance at an interval of 20mm. The friction test was carried out under the conditions of 19.6N in pressing load and 40mm in friction stroke, wherein 200 times of reciprocating frictional load were applied to the test piece. Thereafter, the test piece was removed from the Scott tester.

The measurement of water pressure resistance based on JIS L 1092B method was carried out again on each of the moisture permeable waterproof fabric of Examples 5∼7 and each of the moisture permeable waterproof fabric of Comparative Examples 4∼6 after finishing the washing test of them. Additionally, the measurement of water pressure resistance based on JIS L 1092B method was carried out again on each of the moisture permeable waterproof fabric of Examples 5∼7 and each of the moisture permeable waterproof fabric of Comparative Examples 4∼6 after finishing the friction test of them. Incidentally, in this measurement of water pressure resistance of these moisture permeable waterproof fabrics, patch cloth was not used. The results of measurement are shown in Table 3.

**Table 3**

| Items | Unit | Example 5 | Example 6 | Example 7 | Comp. Example 4 | Comp. Example 5 |
|---|---|---|---|---|---|---|
| Structure of moisture permeable waterproof fabric | - | Outer material/porous polyurethane film 1/porous polytetrafluoroethylene film/lining | Outer material/porous polyurethane film 1/porous polytetrafluoroethylene film/lining | Outer material/porous polytetrafluoroethylene film/porous polyurethane film 1/lining | Outer material/porous polytetrafluoroethylene film/lining | Outer material/porous polyurethane film 1/lining |
| Water pressure resistance from outer material side (before washing test) | mm | 30,500 | 29,000 | 28,000 | 12,000 | 30,000 |
| Water pressure resistance from outer material side (after 50 times of washing test) | mm | 18,000 | 16,000 | 17,000 | 2,000 | 15,000 |
| Water pressure resistance from outer material side (after friction test) | mm | 18,000 | 17,500 | 12,000 | 1,000 | 1,500 |
| Moisture permeability from lining side | g/m2·24h | 7,000 | 6,500 | 6,400 | 7,600 | 7,800 |

As seen from Table 3, the moisture permeable waterproof fabrics of Examples 5∼7 indicated almost the same degree of moisture permeability as that of the moisture permeable waterproof fabrics of Comparative Examples 4 and 5. In the case of clothes where the moisture permeable waterproof fabric is used for example, as long as the moisture permeability of the moisture permeable waterproof fabric is not less than 5000g/m² ·24 hours, it is possible to enable moisture to sufficiently pass from the inside of the clothes to the outside thereof through the moisture permeable waterproof fabric. Therefore, it will be recognized that the moisture permeable waterproof fabrics of Examples 5∼7 exhibited a sufficient moisture permeability.

If the moisture permeable waterproof fabric is to be used as a material for clothes, etc. for example, the water pressure resistance thereof after 50 times of washing should preferably be 10000mm or more. In the case of the fabric of Comparative Example 4 however, the water pressure resistance thereof as measured from the outer material side after 50 times of washing was decreased to 2000mm. Whereas, in the case of the fabrics of Examples 5∼7, the water pressure resistance thereof as measured from the outer material side after 50 times of washing was retained within the range of 16000mm∼18000mm, thus indicating a sufficient durability.

It will be recognized from the comparison between the moisture permeable waterproof fabrics of Examples 5∼7 and the moisture permeable waterproof fabrics of Comparative Examples 4 and 5 that as compared with the fabrics of Comparative Examples 4 and 5, the moisture permeable waterproof fabrics of Examples 5∼7 are superior in water pressure resistance as measured from the outer material side after 50 times of washing.

If the moisture permeable waterproof fabric is to be used as a material for clothes, etc. for example, the water pressure resistance thereof after the friction test should preferably be 6000mm or more. In the case of the fabrics of Comparative Examples 4 and 5 however, the water pressure resistance thereof as measured from the outer material side after the friction test was decreased to 1000mm∼1500mm. Whereas, in the case of the fabrics of Examples 5∼7, the water pressure resistance thereof as measured from the outer material side after the friction test was retained within the range of 12000mm∼18000mm, thus indicating a sufficient durability.

Accordingly, it will be recognized that the moisture permeable waterproof fabrics of Examples 5∼7 are capable of retaining sufficient moisture permeability. Furthermore, it will be recognized that when the moisture permeable waterproof fabrics of Examples 5∼7 are used as a material for clothes, they are capable of suppressing the deterioration of water pressure resistance (representing waterproofness) even if the external force is repeatedly applied to the moisture permeable waterproof fabrics.

The moisture permeable waterproof fabric may be manufactured by directly coating a porous polyurethane layer on the surface of a laminated fabric. Followings are explanations on the examples of the moisture permeable waterproof fabric wherein a porous polyurethane layer is directly coated on the surface of a laminated fabric.

### Example 8

First of all, an adhesive is coated on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Then, the outer material having the adhesive coated thereon is subjected to drying for one minute at a temperature of 120°C. The adhesive is coated in a dot-like pattern on a prescribed adhering surface of the outer material, each dot having a configuration of square of 0.40mm x 0.40mm. One of the diagonal lines of this square is in parallel with the delivering direction of the outer material. Therefore, the other of the diagonal lines of this square is orthogonal to the delivering direction of the outer material.

Then, a porous polytetrafluoroethylene film is superimposed on the prescribed adhering surface of the outer material. The resultant laminated fabric is passed through an interstice between a metal roll and a rubber roll at room temperature and press-bonded at a linear pressure of 49N/cm. Then, this press-bonded laminated fabric is subjected to aging for 48 hours at room temperature.

Then, by making use of a comma coater, a wet type porous polyurethane composition is coated on the surface of a porous polytetrafluoroethylene film of the laminated fabric. This wet type porous polyurethane composition is composed of 100 parts by weight of Leathamine CU-8516NL (DainichiSeika Color & Chenicals Mfg. Co., Ltd.), 20 parts by weight of N,N-dimethylformamide, and 20 parts by weight of ethyl acetate. The laminated fabric coated with the porous polyurethane composition is dipped at first in an aqueous solution of 40 mass% of N,N-dimethylformamide at a temperature of 30°C for two minutes and then in water of 40°C for 10 minutes.

Then, the laminated fabric is subjected to a drying heat treatment at a temperature of 140°C for 40 seconds to form a layer of the wet type porous polyurethane layer. The thickness of this porous polyurethane layer is 30µm.

Further, by making use of a gravure coater equipped with a gravure roll, an adhesive is coated on the surface of the wet type porous polyurethane layer of the laminated fabric.

The laminated fabric having the adhesive coated thereon is subjected to drying treatment for one minute at a temperature of 120°C. The adhesive is coated in a dot-like pattern on the surface of the wet type porous polyurethane layer, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

Next, a lining is superimposed on the surface of wet type porous polyurethane layer of the laminated fabric. The resultant laminated fabric having the lining laminated thereon is passed through an interstice between a metal roll and a rubber roll at room temperature and press-bonded at a linear pressure of 49N/cm. Then, this press-bonded laminated fabric is subjected to aging for 48 hours at room temperature, thereby accomplishing the manufacture of the moisture permeable waterproof fabric of Example 8 which is constructed to contain the moisture permeable waterproof composite film. The moisture permeable waterproof fabric of Example 8 is formed of a 4-ply structure comprising the outer material/the porous polytetrafluoroethylene film/the wet type porous polyurethane film layer/the lining.

### Example 9

First of all, an adhesive is coated on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Then, the outer material having the adhesive coated thereon is subjected to drying for one minute at a temperature of 120°C. The adhesive is coated in a dot-like pattern on a prescribed adhering surface of the outer material, each dot having a configuration of square of 0.40mm x 0.40mm. One of the diagonal lines of this square is in parallel with the delivering direction of the outer material. Therefore, the other of the diagonal lines of this square is orthogonal to the delivering direction of the outer material.

Then, a porous polytetrafluoroethylene film is superimposed on the prescribed adhering surface of the outer material. The resultant laminated fabric is passed through an interstice between a metal roll and a rubber roll at room temperature and press-bonded at a linear pressure of 49N/cm. Then, this press-bonded laminated fabric is subjected to aging for 48 hours at room temperature.

Then, by making use of a comma coater, a W/O type porous polyurethane composition is coated on the surface of a porous polytetrafluoroethylene film of the laminated fabric. This W/O type porous polyurethane composition is composed of 100 parts by weight of Soltex (PX-550) (DIC Corporation), 50 parts by weight of MEK/Tol (1/2 premix), 1 part by weight of Asister SD-27M (DIC Corporation), and 50 parts by weight of water/MEK (9/1 premix). Then, the resultant laminated fabric is subjected to drying heat treatment at 60°C for 20 seconds, at 80°C for 20 seconds, at 120°C for 40 seconds and at 140°C for 30 seconds, thereby forming a dry type W/O porous polyurethane layer. The thickness of this dry type W/O porous polyurethane layer is 30µm.

Further, by making use of a gravure coater equipped with a gravure roll, an adhesive is coated on the surface of the dry type W/O porous polyurethane layer of the laminated fabric.

The laminated fabric having the adhesive coated thereon is subjected to drying for one minute at a temperature of 120°C. The adhesive is coated in a dot-like pattern on the surface of the dry type W/O porous polyurethane layer, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

Next, a lining is superimposed on the surface of dry type W/O porous polyurethane layer of the laminated fabric. The resultant laminated fabric having the lining laminated thereon is passed through an interstice between a metal roll and a rubber roll at room temperature and press-bonded at a linear pressure of 49N/cm. Then, this press-bonded laminated fabric is subjected to aging for 48 hours at room temperature, thereby accomplishing the manufacture of the moisture permeable waterproof fabric of Example 9 which is constructed to contain the moisture permeable waterproof composite film. The moisture permeable waterproof fabric of Example 9 is formed of a 4-ply structure comprising the outer material/the porous polytetrafluoroethylene film/the dry type W/O porous polyurethane film layer/the lining.

### Example 10

First of all, an adhesive is coated on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Next, the outer material having the adhesive coated thereon is subjected to drying for one minute at a temperature of 120°C. The adhesive is coated in a dot-like pattern on a prescribed adhering surface of the outer material, each dot having a configuration of square of 0.40mm x 0.40mm. One of the diagonal lines of this square is in parallel with the delivering direction of the outer material. Therefore, the other of the diagonal lines of this square is orthogonal to the delivering direction of the outer material.

Then, the moisture permeable waterproof composite film of Example 1 is superimposed on the prescribed adhering surface of the outer material. In this case, the porous polyurethane film 1 side of the composite film is positioned to face the outer material. The resultant laminated fabric is passed through an interstice between a metal roll and a rubber roll at room temperature and press-bonded at a linear pressure of 49N/cm. Then, this press-bonded laminated fabric is subjected to aging for 48 hours at room temperature.

Then, by making use of a comma coater, the same wet type porous polyurethane composition as employed in Example 8 is coated on the surface of a porous polytetrafluoroethylene film of the laminated fabric. This laminated fabric coated with the porous polyurethane composition is dipped at first in an aqueous solution of 40 mass% of N,N-dimethylformamide at a temperature of 30°C for two minutes and then in water of 40°C for 10 minutes.

Then, the laminated fabric is subjected to a drying heat treatment at a temperature of 140°C for 40 seconds to form a layer of the wet type porous polyurethane. The thickness of this porous polyurethane layer is 30µm.

Further, by making use of a gravure coater equipped with a gravure roll, an adhesive is coated on the surface of the wet type porous polyurethane layer of the laminated fabric.

The laminated fabric having the adhesive coated thereon is subjected to drying treatment for one minute at a temperature of 120°C. The adhesive is coated in a dot-like pattern on the surface of the wet type porous polyurethane layer, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

Next, a lining is superimposed on the surface of wet type porous polyurethane layer of the laminated fabric. The resultant laminated fabric having the lining laminated thereon is passed through an interstice between a metal roll and a rubber roll at room temperature and press-bonded at a linear pressure of 49N/cm. Then, this press-bonded laminated fabric is subjected to aging for 48 hours at room temperature, thereby accomplishing the manufacture of the moisture permeable waterproof fabric of Example 10 which is constructed to contain the moisture permeable waterproof composite film. The moisture permeable waterproof fabric of Example 10 is formed of a 5-ply structure comprising the outer material/the porous polyurethane film 1/the the porous polytetrafluoroethylene film/the wet type porous polyurethane film layer/the lining.

Followings are explanations on a 5-ply structure of moisture permeable waterproof fabric which can be manufactured by a method other than the method of coating a moisture permeable waterproof layer directly on the surface of a moisture permeable waterproof fabric.

### Example 11

First of all, an adhesive is coated on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

Then, the outer material having the adhesive coated thereon is subjected to drying treatment for one minute at a temperature of 120°C. The adhesive is coated in a dot-like pattern on a prescribed adhering surface of the outer material, each dot having a configuration of square of 0.40mm x 0.40mm. One of the diagonal lines of this square is in parallel with the delivering direction of the outer material. Therefore, the other of the diagonal lines of this square is orthogonal to the delivering direction of the outer material.

Then, the moisture permeable waterproof composite film of Example 1 is superimposed on the prescribed adhering surface of the outer material. In this case, porous polytetrafluoroethylene film side of the composite film is positioned to face the outer material. The resultant laminated fabric is passed through an interstice between a metal roll and a rubber roll at room temperature and press-bonded at a linear pressure of 49N/cm. Then, this press-bonded laminated fabric is subjected to aging for 48 hours at room temperature.

Further, by making use of a gravure coater equipped with a gravure roll, an adhesive is coated on the surface of the porous polyurethane film of the laminated fabric.

The laminated fabric having the adhesive coated thereon is subjected to drying for one minute at a temperature of 120°C. The adhesive is coated in a dot-like pattern on the surface of the wet type porous polyurethane layer, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

A porous polytetrafluoroethylene film is superimposed on the surface of the porous polyurethane film of the laminated fabric. The laminated fabric having the porous polytetrafluoroethylene film superimposed thereon is passed through an interstice between a metal roll and a rubber roll at room temperature and press-bonded at a linear pressure of 49N/cm. Then, this press-bonded laminated fabric is subjected to aging for 48 hours at room temperature.

Further, by making use of a gravure coater equipped with a gravure roll, an adhesive is coated on the surface of the porous polytetrafluoroethylene layer of the laminated fabric.

The laminated fabric having the adhesive coated thereon is subjected to drying for one minute at a temperature of 120°C. The adhesive is coated in a dot-like pattern on the surface of the porous polytetrafluoroethylene film, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

Then, a lining is superimposed on the surface of porous polytetrafluoroethylene film of the laminated fabric. The resultant laminated fabric having the lining laminated thereon is passed through an interstice between a metal roll and a rubber roll at room temperature and press-bonded at a linear pressure of 49N/cm. Then, this press-bonded laminated fabric is subjected to aging for 48 hours at room temperature, thereby accomplishing the manufacture of the moisture permeable waterproof fabric of Example 11 which is constructed to contain the moisture permeable waterproof composite film. The moisture permeable waterproof fabric of Example 11 is formed of a 5-ply structure comprising the outer material/the porous polytetrafluoroethylene film/the porous polyurethane film 1/the porous polytetrafluoroethylene film/the lining. The porous polytetrafluoroethylene film and the porous polyurethane film 1 are partially bonded to each other through the contacting surface portions thereof.

The characteristics of the moisture permeable waterproof fabric of Examples 8∼11 were measured as follows.

The moisture permeable waterproof fabrics of Examples 8∼11 were measured to determine the water pressure resistance from the outer material side as well as the water pressure resistance from the lining side and the moisture permeability from the lining side according to JIS L 1099A-1 method.

Next, the moisture permeable waterproof fabric of Examples 8∼11 were subjected to 50 times of the washing test according to JIS L 0217 103 method.

Before being subjected to the washing test, test pieces each having a size of 50mm x 200mm were prepared from each of the moisture permeable waterproof fabric of Examples 8∼11. In the preparation of these test pieces, the moisture permeable waterproof fabric of each of these examples having a size of 200mm x 20mm was equally bent twice in the same longitudinal direction to prepare each of the test pieces.

By making use of a Scott tester, each of the test pieces was subjected to a friction test based on JIS L 1096 frictional strength B method. In the employment of the Scott tester, the opposite ends of test piece, 15mm in width, were gripped by a couple of chucks opened in advance at an interval of 20mm. The friction test was carried out under the conditions of 19.6N in pressing load and 40mm in friction stroke, wherein 200 times of reciprocating frictional load were applied to the test piece. Thereafter, the test piece was removed from the Scott tester.

The measurement of water pressure resistance was carried out again on each of the moisture permeable waterproof fabric of Examples 8∼11 after finishing the washing test of them. Additionally, the measurement of water pressure resistance was carried out again on each of the moisture permeable waterproof fabric of Examples 8∼11 after finishing the friction test of them. The results of measurement are shown in Table 4.

**Table 4**

| Items | Unit | Example 8 | Example 9 | Example 10 | Example 11 |
|---|---|---|---|---|---|
| Structure of moisture permeable waterproof fabric | - | Outer material/porous polytetrafluoroethylene film/wet type porous polyurethane layer/lining | Outer material/porous polytetrafluoroethylene film/dry type W/O porous polyurethane layer/lining | Outer material/porous polyurethane film 1/porous polytetrafluoroethylene film/wet type porous polyurethane layer/lining | Outer material/porous polytetrafluoroethylene film/porous polyurethane film 1/porous polytetrafluoroethylene film/lining |
| Water pressure resistance from outer material side (before washing test) | mm | 27,000 | 29,000 | 32,000 | 34,000 |
| Water pressure resistance from outer material side (after 50 times of washing test) | mm | 16,000 | 15,000 | 22,000 | 21,000 |
| Water pressure resistance from outer material side (after friction test) | mm | 12,000 | 10,500 | 21,000 | 20,000 |
| Moisture permeability from lining side | g/m2·24h | 7,000 | 7,600 | 5,500 | 6,000 |

As seen from Table 4, each of the moisture permeable waterproof fabrics of Examples 8∼11 indicated a moisture permeability of more than 5000g/m² ·24 hours. Therefore, it will be recognized that the moisture permeable waterproof fabrics of Examples 8∼11 are capable of exhibiting a sufficient moisture permeability.

If the moisture permeable waterproof fabric is to be used as a material for clothes, etc. for example, the water pressure resistance thereof after the friction test should preferably be 10000mm or more. In the case of the fabrics of Examples 8-11, the water pressure resistance thereof as measured from the outer material side after the friction test was retained within the range of 10500mm∼21000mm, thus indicating a sufficient durability.

Accordingly, it will be recognized that the moisture permeable waterproof fabrics of Examples 8∼11 are capable of retaining sufficient moisture permeability. Furthermore, it will be recognized that even when the moisture permeable waterproof fabrics of Examples 8∼11 are used as a material for clothes, they are capable of suppressing the deterioration of water pressure resistance (representing waterproofness) even if the external force is repeatedly applied to the moisture permeable waterproof fabrics.

In view of enhancing the durability against a detergent (surfactant) at the time of washing as well as in view of coping with the soiling by sebum of human body or by oil, the moisture permeable waterproof composite film may be created to have oil repellency. In order to provide the porous polyurethane layer with oil repellency, an oil repellent porous polyurethane film available from Hiramatsu Sangyo Co., Ltd. for example may be employed.

In the above-described explanation of the examples of the moisture permeable waterproof composite film, the explanation is concentrated on the cases where the moisture permeable waterproof composite film is formed of a 2-ply or 3-ply structure. However, the present invention is not limited such structures but it may be formed of not less than 4-ply structure as long as the moisture permeability of the moisture permeable waterproof composite film would become not less than 5000g/m² ·24 hours.

In the above-described explanation of the examples of the moisture permeable waterproof composite film, the explanation is concentrated on the cases where an adhesive is employed for the bonding between the porous polytetrafluoroethylene film representing the porous polytetrafluoroethylene layer and the porous polyurethane film representing the porous polyurethane layer. However, the present invention is not limited such an adhesive. Namely, a hotmelt type adhesive may be employed for the bonding between the porous polytetrafluoroethylene film representing the porous polytetrafluoroethylene layer and the porous polyurethane film representing the porous polyurethane layer.

When a moisture-curing type hotmelt adhesive which is available in the market and is one of hotmelt type adhesives is employed in place of the aforementioned adhesive in Example 1, the moisture permeable waterproof fabric can be manufactured according to the following procedures. First of all, the hotmelt adhesive is allowed to thermally dissolve at 110°C and then coated on a prescribed adhering surface of the porous polyurethane film by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

The hotmelt adhesive is coated in a dot-like pattern on a prescribed adhering surface of the porous polyurethane film, each dot having a configuration of square of 0.40mm x 0.40mm. One of the diagonal lines of this square is in parallel with the delivering direction of the porous polyurethane film. Therefore, the other of the diagonal lines of this square is orthogonal to the delivering direction of the porous polyurethane film.

Then, a porous polytetrafluoroethylene film is superimposed on the prescribed adhering surface of the porous polyurethane film. The resultant laminate of films is passed through an interstice between rubber rolls only at room temperature and press-bonded at a linear pressure of 49N/cm. Then, this press-bonded films are stored for 48 hours at room temperature, thereby allowing the hotmelt adhesive to cure by the effects of moisture in air atmosphere, thereby accomplishing the manufacture of the moisture permeable waterproof composite film which is composed of a laminate of a porous polytetrafluoroethylene film and a porous polyurethane film.

It is also possible to utilize thermowelding for the bonding between the porous polytetrafluoroethylene film representing the porous polytetrafluoroethylene layer and the porous polyurethane film representing the porous polyurethane layer.

In the above-described explanations on the moisture permeable waterproof films, the water pressure resistance thereof before and after 50 times of washing was measured to demonstrate a sufficient durability of the moisture permeable waterproof films. Additionally, some kinds of the moisture permeable waterproof films of the above Examples and Comparative Examples were measured to determine the water pressure resistance thereof before and after 10 times of washing as well as the water pressure resistance thereof before and after 20 times of washing, the results being shown in Table 5.

**Table 5**

| Items | Unit | Example 1 | Comp. Example 1 | Comp. Example 2 |
|---|---|---|---|---|
| Porous polyurethane layer | - | Porous polyurethane film 1 | Porous polyurethane film 1 | None |
| Porous polytetrafluoroethylene layer | - | Porous polytetrafluoroethylene film | None | Porous polytetrafluoroethylene film |
| Water pressure resistance from porous polyurethane layer side (after 10 times of washing test) | mm | 26,000 | 16,000 | - |
| Water pressure resistance from porous polyurethane layer side (after 20 times of washing test) | mm | 23,000 | 13,000 | - |
| Water pressure resistance from porous polytetrafluoroethylene layer side (after 10 times of washing test) | mm | 26,000 | - | 1,800 |
| Water pressure resistance from porous polytetrafluoroethylene layer side (after 20 times of washing test) | mm | 23,000 | - | 1,500 |

If the moisture permeable waterproof composite film is to be used as a material for clothes, etc. for example, the water pressure resistance thereof after 10 times of washing and after 20 times of washing should preferably be 10000mm or more. In the case of the composite film of Example 1, not only the water pressure resistance thereof as measured from the porous polytetrafluoroethylene layer side but also the water pressure resistance thereof as measured from the porous polyurethane layer side was found to fall within the range of 23000mm∼26000mm, thus indicating a sufficient durability. It will be also recognized that even compared with the composite films of Comparative Examples 1 and 3, the composite film of Example 1 is superior in durability.

In the above-described explanation of the examples of the moisture permeable waterproof fabric, the explanation is concentrated on the cases where the moisture permeable waterproof fabric is formed of a 4-ply or 5-ply structure. However, the present invention is not limited such structures but it may be formed of not less than 6-ply structure as long as the moisture permeability of the moisture permeable waterproof fabric would become not less than 5000g/m² ·24 hours.

In the above-described explanation of the examples of the moisture permeable waterproof fabric, the explanation is concentrated on the cases where an adhesive is employed for the bonding between the outer material or the lining and the moisture permeable waterproof composite film. However, the present invention is not limited such an adhesive. Namely, a hotmelt type adhesive may be employed for the bonding between the outer material or the lining and the moisture permeable waterproof composite film.

When a moisture-curing type hotmelt adhesive which is available in the market and is one of hotmelt type adhesives is employed in place of the aforementioned adhesive in Example 5, the moisture permeable waterproof fabric can be manufactured according to the following procedures. First of all, the hotmelt adhesive is allowed to thermally dissolve at 110°C and then coated on a prescribed adhering surface of an outer material by making use of a gravure coater equipped with a gravure roll. The surface of the gravure roll is engraved with a continuous pattern of 40 meshes each mesh having a square of 0.40mm x 0.40mm. This pattern is arranged such that one of the diagonal lines of this square is in parallel with the axis of the gravure roll. The height of the square in the cross-sectional direction of the roll is set to 20µm.

The hotmelt adhesive is coated in a dot-like pattern on a prescribed adhering surface of the outer material, each dot having a configuration of square of 0.40mm x 0.40mm. One of the diagonal lines of this square is in parallel with the delivering direction of the outer material. Therefore, the other of the diagonal lines of this square is orthogonal to the delivering direction of the outer material.

Then, a moisture permeable waterproof composite film is superimposed on the prescribed adhering surface of the outer material in such a manner that the porous polyurethane film side is positioned to face the outer material. The resultant laminated fabric is passed through an interstice between a metal roll and a rubber roll at room temperature and press-bonded at a linear pressure of 49N/cm. Then, this press-bonded laminated fabric is stored for 48 hours at room temperature, thereby allowing the hotmelt resin to cure.

The hotmelt adhesive is allowed to thermally dissolve at 110°C and then coated on a prescribed adhering surface of the porous polytetrafluoroethylene film of the laminated fabric by making use of a gravure coater equipped with a gravure roll.

The hotmelt adhesive is coated in a dot-like pattern on the surface of the porous polytetrafluoroethylene film, each dot having a configuration of square of 0.40mm x 0.40mm. One of the diagonal lines of this square is in parallel with the delivering direction of the laminated fabric. Therefore, the other of the diagonal lines of this square is orthogonal to the delivering direction of the laminated fabric.

Next, a lining is superimposed on the surface of porous polytetrafluoroethylene film of the laminated fabric. The resultant laminated fabric having the lining laminated thereon is passed through an interstice between a rubber roll and a rubber roll at room temperature and press-bonded at a linear pressure of 49N/cm. Then, this press-bonded laminated fabric is stored for 48 hours at room temperature to allow the hotmelt adhesive to cure by the effects of moisture in air atmosphere, thereby accomplishing the manufacture of the moisture permeable waterproof fabric which is constructed to contain the moisture permeable waterproof composite film. This moisture permeable waterproof fabric is formed of a 4-ply structure comprising the outer material/the porous polyurethane film /the porous polytetrafluoroethylene film/the lining.

It is also possible to utilize thermowelding for the bonding between the outer material or the lining and the moisture permeable waterproof composite film.

With respect to the porous polyurethane layer of the moisture permeable waterproof composite film of the present invention, it is possible to employ polyurethane nonwoven web composed of fiber having a diameter of less than 1µm. The ultrafine fiber having a diameter of less than 1µm can be manufactured by any known methods such as an electrospinning method, a flush spinning method, a composite spinning method, etc. Then, the fibers thus obtained are arranged in the form of sheet to obtain the nonwoven web. The nonwoven web may be prepared by making use of a film available in the markets. Alternatively, by making use of the electrospinning method, etc. the nonwoven web may be formed directly on the surface of porous polytetrafluoroethylene film to be employed in the present invention.

In the above-described explanations on the moisture permeable waterproof composite fabric, the water pressure resistance thereof before and after 50 times of washing was measured to demonstrate a sufficient durability of the moisture permeable waterproof composite fabric. Additionally, some kinds of the moisture permeable waterproof composite fabrics of the above Examples and Comparative Examples were measured to determine the water pressure resistance thereof before and after 10 times of washing as well as the water pressure resistance thereof before and after 20 times of washing, the results being shown in Table 6.

**Table 6**

| Items | Unit | Example 5 | Comp. Example 4 | Comp. Example 5 |
|---|---|---|---|---|
| Structure of moisture permeable waterproof fabric | - | Outer material/porous polyurethane film 1/porous polytetrafluoroethylene film/lining | Outer material/porous polytetrafluoroethylene film/lining | Outer material/porous polyurethane film 1/lining |
| Water pressure resistance from outer material side (after 10 times of washing test) | mm | 20,000 | 2,500 | 18,000 |
| Water pressure resistance from outer material side (after 20 times of washing test) | mm | 19,000 | 2,000 | 15,500 |

If the moisture permeable waterproof fabric is to be used as a material for clothes, etc. for example, the water pressure resistance thereof after 10 times and 20 times of washing should preferably be 10000mm or more. In the case of the fabric of Comparative Example 4 however, the water pressure resistance thereof as measured from the outer material side after 10 times and 20 times of washing was decreased to 2000mm∼2500mm. Whereas, in the case of the fabric of Example 5, the water pressure resistance thereof as measured from the outer material side after 10 times and 20 times of washing was retained within the range of 19000mm∼20000mm, thus indicating a sufficient durability.

In the case of the fabric of Comparative Example 5, the water pressure resistance thereof after 10 times and 20 times of washing was retained within the range of 15000mm∼18000mm, thus indicating a water pressure resistance of more than 10000mm. However, it will be recognized from the comparison between the moisture permeable waterproof fabric of Example 5 and the moisture permeable waterproof fabric of Comparative Example 5 that the fabric of Example 5 is more excellent than the fabric of Comparative Example 5 in terms of the water pressure resistance as measured from the outer material side after 10 times and 20 times of washing.

## Claims

1. A moisture permeable waterproof composite film which is formed of a laminate comprising of at least one layer of porous polytetrafluoroethylene exhibiting waterproofness, air permeability and moisture permeability, and at least one layer of porous polyurethane;
the porous polyurethane layer having pores of not more than 10µm in size and routes which enable gas to pass from one surface thereof to the other surface thereof thereby enabling the porous polyurethane layer to exhibit waterproofness and moisture permeability; and
said laminate being laminated in a manner to exhibit Gurley air permeability resistance, as determined by JIS L 1096 B method (Gurley form method), in the range 50 - 1000 seconds.

2. The moisture permeable waterproof composite film according to claim 1, wherein the moisture permeable waterproof composite film is essentially consisting of a 2-ply structure consisting of the porous polytetrafluoroethylene film and the porous polyurethane layer, a 3-ply consisting of the porous polytetrafluoroethylene film, a porous polyurethane layer and the porous polytetrafluoroethylene film, which are laminated in the mentioned order; or a 3-ply consisting of the porous polyurethane layer, the porous polytetrafluoroethylene film and the porous polyurethane layer, which are laminated in the mentioned order.

3. The moisture permeable waterproof composite film according to claim 1 or 2, wherein the porous polyurethane layer has a thickness of not more than 100µm.

4. The moisture permeable waterproof composite film according to any one of claims 1 to 3, which is featured in that the moisture permeability thereof as determined by JIS L 1099A-1 method is not less than 5000g/m²·24 hours.

5. The moisture permeable waterproof composite film according to any one of claims 1 to 4, which is featured in that the water pressure resistance thereof after a repetition of 10∼50 times of washing as determined by JIS L 0217 103 method is not less than 10000mm.

6. The moisture permeable waterproof composite film according to any one of claims 1 to 5, wherein the porous polytetrafluoroethylene layer and the porous polyurethane layer are partially adhered face-to-face with each other.

7. The moisture permeable waterproof composite film according to any one of claims 1 to 6, wherein the porous polyurethane layer is formed of a porous polyurethane film.

8. A moisture permeable waterproof fabric which is constructed to contain a moisture permeable waterproof composite film as described in any one of claims 1 to 7.

9. The moisture permeable waterproof fabric according to claim 8, which is featured in that the water pressure resistance thereof after a repetition of 10∼50 times of washing as determined by JIS L 0217 103 method is not less than 10000mm.

10. The moisture permeable waterproof fabric according to claim 8 or 9, which
is featured in that the water pressure resistance thereof after a repetition of 200 times of frictional loading as determined by JIS L 1096 frictional strength B method is not less than 6000mm.

## Patentansprüche

1. Feuchtigkeitsdurchlässige, wasserdichte Verbundfolie, welche aus einem Laminat gebildet ist, welches wenigstens eine Schicht aus porösem Polytetrafluorethylen, welche Wasserdichtheit, Luftdurchlässigkeit und Feuchtigkeitsdurchlässigkeit bereitstellt, und wenigstens eine Schicht aus porösem Polyurethan umfasst;
wobei die poröse Polyurethanschicht Poren mit einer Größe von nicht mehr als 10 µm aufweist sowie Verbindungen, welche ermöglichen, dass Gas von ihrer einen Oberfläche zu ihrer anderen Oberfläche durchtreten kann, wodurch es der porösen Polyurethanschicht ermöglicht wird, Wasserdichtheit und Feuchtigkeitsdurchlässigkeit bereitzustellen; und wobei das Laminat in einer Weise laminiert ist, dass es einen Luftdurchlässigkeitswiderstand nach Gurley, bestimmt durch das Verfahren JIS L 1096 B (Gurley-Verfahren), im Bereich von 50 - 1000 Sekunden aufweist.

2. Feuchtigkeitsdurchlässige, wasserdichte Verbundfolie nach Anspruch 1,
wobei die feuchtigkeitsdurchlässige, wasserdichte Verbundfolie im Wesentlichen aus einer Zweilagenstruktur, welche aus der porösen Polytetrafluorethylenfolie und der porösen Polyurethanschicht besteht, einer Dreilagenanordnung, welche aus der porösen Polytetrafluor-ethylenfolie, einer porösen Polyurethanschicht und der porösen Polytetrafluorethylenfolie besteht, welche in der genannten Reihenfolge aufeinander laminiert sind; oder einer Dreilagenanordnung besteht, welche aus der porösen Polyurethanschicht, der porösen Polytetrafluorethylenfolie und der porösen Polyurethanschicht besteht, welche in der genannten Reihenfolge aufeinander laminiert sind.

3. Feuchtigkeitsdurchlässige, wasserdichte Verbundfolie nach Anspruch 1 oder 2,
bei der die poröse Polyurethanschicht eine Dicke von nicht mehr als 100µm aufweist.

4. Feuchtigkeitsdurchlässige, wasserdichte Verbundfolie nach einem der Ansprüche 1 - 3,
welche sich dadurch auszeichnet, dass ihre Feuchtigkeitsdurchlässigkeit bestimmt durch das Verfahren JIS L 1099 A-1 nicht kleiner ist als 5000 g/m² x 24 Stunden.

5. Feuchtigkeitsdurchlässige, wasserdichte Verbundfolie nach einem der Ansprüche 1 - 4,
welche sich dadurch auszeichnet, dass ihr Wasserdruckwiderstand nach einer Wiederholung von 10 - 50 Waschgängen bestimmt nach dem Verfahren JIS L 0217 103 nicht weniger als 10.000 mm beträgt.

6. Feuchtigkeitsdurchlässige, wasserdichte Verbundfolie nach einem der Ansprüche 1 - 5,
bei der die poröse Polytetrafluorethylenschicht und die poröse Polyurethanschicht teilweise Seite an Seite miteinander verklebt sind.

7. Feuchtigkeitsdurchlässige, wasserdichte Verbundfolie nach einem der Ansprüche 1 - 6,
bei der die poröse Polyurethanschicht aus einer porösen Polyurethanfolie gebildet ist.

8. Feuchtigkeitsdurchlässiges, wasserdichtes Gewebe, welches so hergestellt ist, dass es eine feuchtigkeitsdurchlässige, wasserdichte Verbundfolie nach einem der Ansprüche 1 - 7 enthält.

9. Feuchtigkeitsdurchlässiges, wasserdichtes Gewebe nach Anspruch 8,
welches sich dadurch auszeichnet, dass sein Wasserdruckwiderstand nach einer Wiederholung von 10 - 50 Waschgängen bestimmt nach dem Verfahren JIS L 0217 103 nicht weniger als 10.000 mm beträgt.

10. Feuchtigkeitsdurchlässiges, wasserdichtes Gewebe nach Anspruch 8 oder 9,
welches sich dadurch auszeichnet, dass sein Wasserdruckwiderstand nach 200 Wiederholungen einer Reiblast bestimmt nach dem Verfahren zur Bestimmung der Reibfestigkeit B nach JIS L 1096 nicht weniger als 6000 mm beträgt.

## Revendications

1. Film composite imperméable à l'eau, perméable à l'humidité, qui est formé d'un stratifié se composant d'au moins une couche de polytétrafluoroéthylène poreuse présentant une imperméabilité à l'eau, une perméabilité à l'air et une perméabilité à l'humidité, et d'au moins une couche de polyuréthane poreuse ;
la couche de polyuréthane poreuse ayant des pores de pas plus de 10 µm en dimension et des voies qui permettent à du gaz de passer d'une surface de celle-ci à l'autre surface de celle-ci, permettant de cette façon à la couche de polyuréthane poreuse de présenter une imperméabilité à l'eau et une perméabilité à l'humidité ;
et
ledit stratifié étant laminé de façon à présenter une résistance à la perméabilité à l'air de Gurley, telle que déterminée par JIS L 1096 méthode B (méthode de Gurley), dans la plage de 50-1000 secondes.

2. Film composite imperméable à l'eau, perméable à l'humidité, selon la revendication 1, dans lequel le film composite imperméable à l'eau, perméable à l'humidité, consiste essentiellement en une structure à 2 couches consistant en le film de polytétrafluoroéthylène poreux et la couche de polyuréthane poreuse, une structure à 3 couches consistant en le film de polytétrafluoroéthylène poreux, une couche de polyuréthane poreuse et le film de polytétrafluoroéthylène poreux, qui sont laminés dans l'ordre mentionné ; ou en une structure à 3 couches consistant en la couche de polyuréthane poreuse, le film de polytétrafluoroéthylène poreux et la couche de polyuréthane poreuse, qui sont laminés dans l'ordre mentionné.

3. Film composite imperméable à l'eau, perméable à l'humidité, selon l'une des revendications 1 ou 2, dans lequel la couche de polyuréthane poreuse a une épaisseur de pas plus de 100 µm.

4. Film composite imperméable à l'eau, perméable à l'humidité, selon l'une quelconque des revendications 1 à 3, qui est **caractérisé par le fait que** la perméabilité à l'humidité de celui-ci, telle que déterminée par JIS L 1099A méthode 1 n'est pas inférieure à 5 000 g/m²·24 heures.

5. Film composite imperméable à l'eau, perméable à l'humidité, selon l'une quelconque des revendications 1 à 4, qui est **caractérisé par le fait que** la résistance à la pression d'eau de celui-ci après une répétition d'un lavage de 10 ∼ 50 fois, telle que déterminée par JIS L 0217 méthode 103, n'est pas inférieure à 10 000 mm.

6. Film composite imperméable à l'eau, perméable à l'humidité, selon l'une quelconque des revendications 1 à 5, dans lequel la couche de polytétrafluoroéthylène poreuse et la couche de polyuréthane poreuse adhèrent partiellement face à face l'une avec l'autre.

7. Film composite imperméable à l'eau, perméable à l'humidité, selon l'une quelconque des revendications 1 à 6, dans lequel la couche de polyuréthane poreuse est formée d'un film de polyuréthane poreux.

8. Tissu imperméable à l'eau, perméable à l'humidité, qui est construit pour contenir un film composite imperméable à l'eau, perméable à l'humidité, tel que décrit dans l'une quelconque des revendications 1 à 7.

9. Tissu imperméable à l'eau, perméable à l'humidité, selon la revendication 8, qui est **caractérisé par le fait que** la résistance à la pression d'eau de celui-ci après une répétition d'un lavage de 10 ∼ 50 fois, telle que déterminée par JIS L 0217 méthode 103, n'est pas inférieure à 10 000 mm.

10. Tissu imperméable à l'eau, perméable à l'humidité, selon l'une des revendications 8 ou 9, qui est **caractérisé par le fait que** la résistance à la pression d'eau de celui-ci après une répétition d'une charge de frottement de 200 fois, telle que déterminée par JIS L 1096 force de frottement méthode B, n'est pas inférieure à 6 000 mm.
